## Europäisches Patentamt
## European Patent Office
## Office européen des brevets

(19)

(11) Veröffentlichungsnummer: **0 370 397**
**A1**

# (12) EUROPÄISCHE PATENTANMELDUNG

(21) Anmeldenummer: **89121265.6**

(51) Int. Cl.⁵: **B01D 17/022**

(22) Anmeldetag: **17.11.89**

(30) Priorität: **19.11.88 DE 3839144**

(43) Veröffentlichungstag der Anmeldung:
**30.05.90 Patentblatt 90/22**

(84) Benannte Vertragsstaaten:
**AT BE CH DE ES FR GB GR IT LI LU NL SE**

(71) Anmelder: **Ertel, Hans J.**
**Gartenstrasse 15**
**D-7959 Achstetten(DE)**

(72) Erfinder: **Ertel, Hans J.**
**Gartenstrasse 15**
**D-7959 Achstetten(DE)**

(74) Vertreter: **Witte, Alexander, Dr.-Ing. et al**
**Witte, Weller & Hilgenfeldt Patent- und**
**Rechtsanwälte Augustenstrasse 7**
**D-7000 Stuttgart 1(DE)**

(54) **Verfahren zum Aufbereiten von ölhaltigen Wässern.**

(57) Bei einem Verfahren zum Aufbereiten von ölhaltigen Wässern, bei dem eine Öl-in-Wasser-Emulsion mit einem festen Adsorptionsmittel in Berührung gebracht wird, wobei das Adsorptionsmittel das Öl aus dem Wasser entnimmt, und bei dem anschließend das ölfreie Wasser vom Adsorptionsmittel abgetrennt wird, wird vorgeschlagen, daß das Adsorptionsmittel Ruß ist.

EP 0 370 397 A1

## Verfahren zum Aufbereiten von ölhaltigen Wässern

Die Erfindung betrifft ein Verfahren zum Aufbereiten von ölhaltigen Wässern, bei dem eine Öl-in-Wasser-Emulsion mit einem festen Adsorptionsmittel in Berührung gebracht wird, wobei das Adsorptionsmittel das Öl aus dem Wasser entnimmt, und bei dem anschließend das ölfreie Wasser vom Adsorptionsmittel abgetrennt wird.

Ein derartiges Verfahren ist aus wlb "wasser, luft und betrieb", 7-8/88, Seiten 28 ff, insbesondere S. 32, Dr. v. Mylius, "Die Entsorgung von Ölemulsionen und ölhaltigen Abwässern" bekannt.

Bei dem bekannten Verfahren wird als Adsorptionsmittel Aktivkohle eingesetzt, die mit dem ölhaltigen Wasser, beispielsweise einem Kompressorkondensat in Form einer Öl-in-Wasser-Emulsion in Form von Granulat in Berührung gebracht wird.

Unter ölhaltigem Wasser im Sinne der vorliegenden Erfindung werden Mischungen von Wasser und wasserunlöslichen und/oder wasserlöslichen, bei Raumtemperatur flüssigen organischen und/oder anorganischen Verbindungen verstanden. Als Öle im Sinne der vorliegenden Erfindung werden beispielsweise, Mineralöle aus Erdöl, vollsynthetische, anorganische Öle wie Silikonöle, pflanzliche und tierische Öle und Fette, ätherische Öle und auch organische Verbindungen wie halogenierte Kohlenwasserstoffe, wie beispielsweise PCB, Per, Tri oder dgl verstanden.

Beispiele für ölhaltige Wässer sind Bilgenwässer, die bei der Reinigung von Öltanks oder Tankschiffen anfallen, Bilgenwässer, die aus Deponien austreten, Abwässer aus Kraftfahrzeugbetrieben, Tankstellen, Waschanlagen, Kondensate aus Kompressoren oder Klimaanlagen, ölhaltige Abwässer aus lack- oder farbenverarbeitenden Betrieben, tierische oder pflanzliche Fette enthaltende Abwässer aus Schlachthöfen oder Abwässer aus tierische oder pflanzliche Produkte verarbeitenden Betrieben, Bohr-oder Schleifemulisonen aus metallverarbeitenden Betrieben, Abwässer aus chemischen Reinigungsunternehmen oder Abwässer aus der chemischen Industrie selbst.

Die ölhaltigen Wässer fallen dabei je nach Ölgehalt und Löslichkeit des Öles im Wasser als mehr oder weniger klare Lösungen, als Öl-in-Wasser-Emulsionen oder als mehr oder weniger getrennte Zwei-Phasen-Gemische oder als Kombinationen davon an.

Die immer strenger werdenden gesetzlichen Vorschriften über die Behandlung von ölhaltigen Wässern als Abwasser, beispielsweise im Rahmen des Abfallbeseitigungsgesetzes, des Wasserhaushaltsgesetzes oder der Altölverordnung, stellen immer höhere Anforderungen an die Verfahren zum Aufbereiten von ölhaltigen Wässern. Sollen Abwässer einer öffentlichen Abwasserreinigungsanlage zugeführt werden, so muß durch geeignete Reinigungsverfahren der Ölgehalt auf unter 20 mg/l gesenkt werden. Für Direkteinleiter sind als Grenzwert 10 mg/l vorgesehen.

Es sind zahlreiche Verfahren zur Entsorgung von Ölemulsionen und ölhaltigen Abwässern bekannt, die entsprechend ihrer Verfahrensweise als Sedimentationsverfahren, Aufschwimmverfahren, Koaleszer, Flotationsverfahren, Zentrifugalverfahren, Filtrationsverfahren, chemische Verfahren, Membranverfahren, thermische Verfahren und Adsorptionsverfahren unterteilt werden (siehe Dr. Ulrich von Mylius, "Die Entsorgung von Ölemulsionen und ölhaltigen Abwässern", a.a.O).

Adsorptionsverfahren nutzen die Eigenschaft bestimmter Stoffe, beispielsweise von Aktivkohle, Öle und andere organische Substanzen aus dem Wasser zu entnehmen und in sich aufzunehmen.

Die Funktion eines Aktivkohlefilters ist von der Belastung des Abwassers mit Adsorbent abhängig. Eine Kontrolle der Adsorption und damit der Einhaltung bestimmter Grenzwerte im ablaufenden Klarwasser ist schwierig. Die beladene Aktivkohle wird entweder mit den aufgenommenen Substanzen deponiert oder die Austauschfilter werden regeneriert. Nachteilig dabei ist, daß die Aufnahmekapazität von Aktivkohle höchstens 10 Gew.-% der eingesetzten Aktivkohlemenge beträgt und dadurch große Deponiemengen entstehen. Wird Aktivkohle mit ölhaltigen Wässern behandelt, die relativ große Öltröpfchen enthalten, so verliert die Aktivkohle schnell ihre Adsorptionskraft, da die Öltröpfchen die in der Aktivkohle vorhandenen Kapillaren verstopfen. Dadurch bildet sich auf der Oberfläche der Aktivkohlekörper ein schmieriger Ölfilm, der die Aufnahmekapazität der Aktivkohle schlagartig absinken läßt. Dadurch ist es möglich, daß derartige Anlagen "durchschlagen", d.h. trotz an sich ausreichender Aufnahmekapazität der Aktivkohle kann kein Öl mehr aus dem Wasser entnommen werden. So ist es bspw. notwendig, niederkonzentrierte, jedoch stabile Emulsionen durch aufwendige Maßnahmen zunächst aufzuspalten und das entstehende Zwei-Phasengemisch mechanisch zu trennen. Erst dann kann die abgetrennte wässrige Phase mit der Aktivkohle in Berührung gebracht werden.

Ferner ist nachteilig, daß bei der Regenerierung von Aktivkohle erneut Abwasserprobleme entstehen. Werden die in der Aktivkohle aufgenommenen Öle beispielsweise durch thermische Verfahren, wie Erwärmen oder Heißdampfbehandeln, wieder ausgetrieben, so entstehen erneut stark ölhaltige Wässer, die wieder entsorgt werden müssen. Aktivkohle kommt daher bei ölhaltigen Abwässern, wenn überhaupt, nur als Nachreinigungsstufe in Frage, wenn es beispielsweise gilt, eine zusätzliche Belastung von Tensiden aus dem bereits geklärten Wasser zu entfernen (siehe Dr. Ulrich von Mylius, a.a.O., Seite 32 linke Spalte). Ferner wurde nachteilig festgestellt, daß die in der Aktivkohle aufgenommenen Ölsubstanzen bei Endlagerungen der Aktivkohle auf Deponien über Diffusionsprozesse oder unter Druck wieder austreten. Wird solche Aktivkohle auf Mülldeponien endgelagert, und werden anschließend auf diese Aktivkohleschichten weitere Feststoffschichten abgelagert, so kann durch den dadurch auf die Aktivkohle einwirkenden Druck ein Austreten der von der Aktivkohle adsorbierten Öle erfolgen. Diese Öle werden dann als Bilgen oder Sickerwässer aus den Deponien wieder abgeführt. Dadurch wäre die Entsorgung der ölhaltigen Wässer lediglich verlagert und würden ein erhebliches Umweltproblem für spätere Generationen darstellen.

Aufgabe der vorliegenden Erfindung ist daher, ein Verfahren zum Aufbereiten von ölhaltigen Wässern der eingangs genannten Art derart zu verbessern, daß ein Adsorptionsmittel verwendet wird, das eine hohe Ölaufnahmekapazität aufweist und das die aufgenommenen Substanzen auch bei starken mechanischen oder Druckbelastungen nicht mehr abgibt.

Erfindungsgemäß wird die Aufgabe dadurch gelöst, daß das Adsorptionsmittel Ruß ist.

Unter Ruß wird eine Erscheinungsform des Kohlenstoffes verstanden, die sich bei unvollständiger Verbrennung bzw. thermischer Spaltung von dampfförmigen kohlenstoffhaltigen Substanzen bildet. Ruße werden im allgemeinen nach ihren Herstellungsverfahren klassifiziert (Informationsschrift der Firma Degussa "Was ist Ruß", April 1983). Danach kennt man Ruße, die durch unvollständige Verbrennung hergestellt werden, unter der Bezeichnung Flammruß, Channelruß, Gasruß oder Furnaceruß. Unter Rußen, die durch thermische Spaltung erhalten wurden, kennt man Thermal-Ruße, Acetylenruße, Lichtbogenruße.

All diesen Rußarten ist gemein, daß sie aus annähernd kugelförmigen Primärteilchen im Kolloid-Bereich von beispielsweise 5 bis 500 nm bestehen, die meist zu in sich verzweigten, kettenförmigen Aggregaten miteinander verwachsen sind. Das Ausmaß der Aggregation bezeichnet man auch als "Ruß-Struktur". Die Rußaggregate wiederum können sich zu losen Agglomeraten, sogenannte "Rußflocken" zusammen lagern. Die Primärteilchen der Ruße sind wie Graphit aus Kohlenstoffsechsringschichten aufgebaut, die jedoch konzentrisch um den Mittelpunkt des Teilchens angeordnet und unregelmäßig gegeneinander verschoben sind. Dadurch unterscheiden sich Ruße grundsätzlich von der Struktur von Aktivkohle, die im wesentlichen aus Kapillarstrukturen oder mehr oder weniger porösen Hohlraumstrukturen aufgebaut ist.

Derartige, sogenannte "Industrieruße", stellen im Gegensatz zu Schornsteinruß eine Stoffgruppe mit genau spezifizierten physikalischen chemischen und anwendungstechnischen Eigenschaften dar. Ruße bzw. "Industrieruße" im Sinne der vorliegenden Erfindung weisen etwa einen Kohlenstoffgehalt von 85 bis 99,9 % auf. Die spezifische Oberfläche der Ruße kann, je nach Art der Herstellung, zwischen 10 und 1000 m²/g variiert werden. Die Ruß-Oberfläche kann nach verschiedenen Methoden, u.a. nach "BET"(Stickstoffadsorption nach Brunnauer, Emmet und Teller) oder aber auch über den mittleren Teilchendurchmesser (Auswertung elektronenmikroskopischer Aufnahmen, "EM-Oberfläche") bestimmt werden. Typische BET-Werte in m²/g liegen bei Flammrußen im Bereich von 20-50, bei Channelrußen im Bereich von 100-950, bei Degussa-Gasrußen im Bereich von 90-800, bei Furnace-Rußen im Bereich von 20-350, bei Thermalrußen im Bereich von 5-65 und bei Acetylen-Rußen etwa bei 60. Ruße mit spezifischen Oberflächen über 150 m²/g weisen im allgemeinen Poren mit Durchmesser $\leq$ 1 nm auf. Das spezifische Gewicht der Ruße liegt bei 1,8-2,1 g/cm³. Die Stampfdichte beträgt abhängig vom Verdichtungsgrad meist 100-600 g/l. Je nach Herstellungsweise und Rohstoff enthält Ruß neben Kohlenstoff 0,3-1,3 % H, 0,1-1,7 % N, 0,1-0,7 % Schwefel und Sauerstoff. Der Sauerstoffgehalt kann bei oxidativ nachbehandelten Rußen biß zu etwa 15 % betragen. Der Sauerstoff liegt zum größten Teil in Form von sauren und basischen Oberflächenoxiden vor. Fest adsorptiv an der Oberfläche gebunden sind meist vernachlässigbar geringe Mengen kondensierter Aromaten, die aus dem Rohstoff durch unvollständige Pyrolyse hervorgegangen sind. Die Ruße sind ferner aufgrund Ihrer Herstellungsweisen ölfrei.

Es wurde überraschenderweise festgestellt, daß Ruße aus ölhaltigen Wässern ölhaltige Substanzen unabhängig von deren Art und in Mengen bis zu einem mehrfachen der Gewichtsmenge an Ruß entfernen. Voraussetzung ist lediglich, daß das Öl als Öl-in-Wasser-Emulsion vorliegt. Öltröpfchen in der Öl-in-Wasser-Emulsion werden in die Rußstruktur der Rußaggregate eingebaut und dadurch dem Wasser entzogen. Die Rußaggregate bilden nach und nach Rußagglomerate, wobei an den Verknüpfungsstellen zwischen den einzelnen Aggregaten in den Agglomeraten neue wirksame Hohlräume entstehen, in die wieder Ölsubstanzen eingebaut werden können. Diese, durch die Agglomeration gebildeten zusätzlichen Hohlräume, sind relativ unabhängig von der Ausgangsart des Rußes, es werden dabei statistisch verteilt, große und kleine Hohlräume gebildet, in die ein breites Spektrum an Öltröpfchengrößen der Öl-in-Wasser-Emulsion aufgenommen werden können. Es ist ein wichtiger Aspekt der Erfindung, daß nicht nur die Ölaufnahmekapazität der ursprünglich eingesetzten Rußpartikel zur Wirkung kommt, sondern daß bei dem Einsatz zusätzliche weitere Aufnahmestellen durch Agglomeration gebildet werden. Dadurch ist die überraschende Aufnahmekapazität, über ein breites Spektrum an Größen und Arten von aufzunehmenden Ölen zu erklären. Ruß, hat auf das Gewicht bezogen, ein wesentlich höheres Ölaufnahmepotential aus Wasser als Aktivkohle, dabei liegt der Faktor in der Größenordnung von 10 bis 100. Ruße sind im neutralen alkalischen und sauren Bereich gleichermaßen aufnahmefähig, so daß die Aufarbeitung unabhängig von dem pH-Wert des aufzuarbeitenden Wassers ist. Dies bedeutet auch gleichzeitig, daß Abwässer mit extremen pH-Werten, d.h. stark saure oder stark alkalische entweder so wie sie sind oder unter Zusatz von Neutralisationsmitteln mit dem Adsorptionsmittel Ruß behandelt werden können. Die gebildeten Rußagglomerate in Form von Flocken sind über einen Fest-Flüssig-Trennvorgang, z.B. eine Filtration einfach vom gereinigten Wasser zu trennen. Die abfiltrierten Flocken können zu festen Kuchen zur Entfernung des Restwassers gepreßt und ggf. anschließend zerkleinert oder granuliert werden, ohne daß dabei auch bei starken Drücken adsorpiertes Öl freigegeben wird. Je nach Art der aufgenommenen Öle können die Rußfilterkuchen verbrannt, endgelagert oder die aufgenommenen Substanzen wieder extrahiert werden. Die behandelten Wässer weisen Restölgehalte von unter 0,5 mg/l auf, d.h. weit unter den gesetzlich geforderten Grenzwerten vön 20 bzw. 10 mg/l.

Die Aufnahmemöglichkeit von Ölen in Rußpartikeln als solche ist bekannt, beispielsweise zur Anfertigung von Pasten, wie Schminken oder dgl., daß aber aus ölhaltigen Wässern in einer einfachen und handhabbaren, d.h. gut von der wässrigen, gereinigten Phase abtrennbare feste Phase erreicht werden kann, ist überraschend.

In einer vorteilhaften Ausgestaltung der Erfindung wird die Öl-in-Wasser-Emulsion intensiv mit dem Ruß dispergiert.

Diese Maßnahme hat den Vorteil, daß die Rußpartikel mit den Ölpartikeln in der wässrigen Phase oft in Berührung treten. Dadurch kann eine Reduzierung der Kontaktzeit zwischen ölhaltigem Wasser und Adsorptionsmittel in Form von Ruß erreicht werden. Die intensive Dispergierung sorgt auch dafür, daß die Größe der Öltröpfchen in der Öl-in-Wasser-Emulsion relativ einheitlich und somit auch steuerbar sind. Das intensive Dispergieren führt auch dazu, daß einzelne Rußaggregate, die bereits Öltröpfchen aufgenommen haben, mit anderen solchen belegten Rußaggregaten zusammentreffen und dadurch Agglomerate bilden, die dann wieder mit den Öltröpfchen in Verbindung treten und diese aus dem Wasser entnehmen.

In einer weiteren Ausgestaltung der Erfindung wird das Dispergieren durch intensives Rühren durchgeführt.

Diese Maßnahme hat den Vorteil, daß auf eine mechanisch einfache Weise der Ruß mit dem ölhaltigen Wasser in Verbindung gebracht werden kann. Diese Maßnahme hat ferner den Vorteil, daß durch entsprechende Ausgestaltung des Rührwerkzeuges bzw. durch Steuerung der Rührgeschwindigkeit definierte Öltröpfchengrößen bzw. Rußagglomerate hergestellt werden können.

In einer weiteren vorteilhaften Ausgestaltung wird die Dispersion vor Abtrennen des ölfreien Wassers vom das Öl enthaltenden Ruß stehengelassen.

Diese Maßnahme hat den Vorteil, daß unter Ausnützung der Schwerkraft eine Trennung der festen und flüssigen Phase stattfindet. Ferner ist möglich, durch Unterbrechen des Rührvorganges die wässrige Phase auf den Ölgehalt zu kontrollieren d.h. beispielsweise durch Kurzanalysen oder optische Methoden kann der Restölgehalt in der wässrigen Phase bestimmt werden. Sollen beispielsweise milchig trübe Emulsionen aufbereitet werden, so kann durch eine visuelle Kontrolle der Grad der Aufarbeitung kontrolliert werden, d.h., ob das über den sich absetzenden Flocken oder unter den aufschwimmenden Flocken verbleibende Filtrat klar ist oder nicht.

In einer weiteren Ausgestaltung der Erfindung wird das Verfahren bei Raumtemperatur durchgeführt.

Diese Maßnahme hat den Vorteil, daß insbesondere im großtechnischen Einsatz ein energiesparendes Verfahren durchgeführt werden kann, das dadurch besonders wirtschaftlich ist.

In einer weiteren Ausgestaltung der Erfindung wird eine solche Menge an Ruß zugegeben, die dem Mehrfachen der Menge entspricht, die zumindest notwendig ist, um aus einer Öl-in-Wasser-Emulsion das Öl zu adsorbieren.

Diese Maßnahme hat den Vorteil, daß die Zeit zur Aufarbeitung eines bestimmten ölhaltigen Wassers stark verkürzt werden kann, da durch die hohe Dichte an Rußpartikel pro Volumeneinheit eine große Auftreffwahrscheinlichkeit zwischen dispergierten Rußpartikeln und Öltröpfchen vorhanden ist, somit sehr rasch diese aus der wässrigen Phase entnommen werden.

In einer weiteren Ausgestaltung der Erfindung, die insbesondere mit der zuvor erwähnten Maßnahme in Zusammenhang steht, wird die abgetrennte, bereits ölhaltige Rußphase so oft erneut mit einem ölhaltigen Wasser in Berührung gebracht, bis die Aufnahmekapazität der Rußphase nahezu erschöpft ist.

Diese Maßnahme hat den Vorteil, daß mit einer bestimmten Rußmenge sehr rasch und in mehreren aufeinanderfolgenden Schritten einzelne Mengen an ölhaltigen Abwässern aufgearbeitet werden können. Unterm Strich konnten damit bessere Ergebnisse erzielt werden, als wenn die einzelnen Abwassermengen mit jeweils entsprechenden kleineren Mengen an Ruß behandelt worden wären.

In einer weiteren Ausgestaltung der Erfindung wird zusätzlich zum Ruß ein Flockungshilfmittel zugegeben.

Diese Maßnahme hat den Vorteil, daß, falls eine besonders rasche Agglomerat(Flocken-)bildung gewünscht wird, da diese Flockenbildung aufgrund eines speziell zu entsorgenden Produktes erwünscht ist, diese rasch erreicht werden kann. So können beispielsweise mit einem Emulgator stabilisierte Emulsionen, wie Bohremulsionen, eine große Anzahl von Öltröpfchen einer bestimmten Art oder Größe aufweisen, die aufgrund von Bearbeitungsvorgängen mit einer weiteren Art oder Größe an Öltröpfchen versehen werden. Wird eine Öltröpfchengröße oder -art bevorzugt von Rußaggregaten und eine weitere bevorzugt von den Rußagglomeraten aufgenommen, so kann zunächst der Ruß zugegeben und nach einer gewissen Zeit ein Flockungshilfsmittel, wodurch eine relativ rasche und überproportional starke Flockenbildung hervorgerufen wird. Es kann somit die Wirkung der Rußpartikel auf einzelne Öltröpfchengrößen oder - arten zeitlich gesteuert werden.

In einer weiteren vorteilhaften Ausgestaltung der Erfindung werden zur Aufarbeitung von sauren Öl-in-Wasser-Emulsionen alkalische Ruße, zur Aufbereitung von alkalischen Öl-in-Wasser-Emulsionen saure Ruße und zur Aufbereitung neutraler Öl-in-Wasser-Emulsionen neutrale Ruße verwendet.

Diese Maßnahmen haben den Vorteil, daß die Ruße zur Neutralisation bzw. Neutralhaltung des Wassers beitragen, so daß keine weiteren Neutralisationsmaßnahmen unter Salzbildung nach der Aufarbeitung des Wassers durchgeführt werden müssen, das bedeutet, daß dieses Wasser beispielsweise unmittelbar nach Beendigung des Verfahrens einer öffentlichen Abwasseranlage zugeführt werden kann.

In einer weiteren Ausgestaltung der Erfindung, bei der das Öl des zu aufarbeitenden ölhaltigen Wassers eine bestimmte Löslichkeit im Wasser besitzt, oder unbegrenzt mit Wasser löslich ist, wird dem ölhaltigen Wasser eine in Wasser unlösliche flüssige Substanz zugegeben, in der das Öl eine bessere Löslichkeit als in Wasser aufweist, so daß das im Wasser gelöste Öl in die flüssige Substanz übergeführt wird; dabei wird die nichtwässrige Phase aus Öl und flüssiger Substanz mit dem verbleibenden Wasser in eine Emulsion übergeführt, und diese Emulsion wird mit dem Ruß in Berührung gebracht.

Diese Maßnahme hat den Vorteil, daß Öle, die in Wasser löslich sind, ebenfalls einfach nach dem erfindungsgemäßen Verfahren aus dem Wasser entnommen werden können. Dazu wird eine Verfahrensstufe vorgeschaltet, die dafür sorgt, daß der Anteil des in Wasser gelösten Öles in eine wasserunlösliche Phase überführt wird, quasi aus dem Wasser extrahiert wird. Die resultierenden Phasen werden in eine Öl-in-Wasser-Emulsion überführt, die dann mit dem Ruß behandelt und dadurch dann das Öl aus der wässrigen Phase abgeschieden wird. Somit ist es möglich, auch Substanzen, die eine relativ hohe Löslichkeit in Wasser besitzen, bis auf einen Gehalt von unter 0,5 mg/l durch das erfindungsgemäße Verfahren zu entfernen. Es können auch Ölschlämme mit emulgatorhaltigen Wasser in einer vorgeschalteten Stufe behandelt werden, die Emulsion von den Schlämmen ggf. abgetrennt und anschließend mit Ruß versehen werden.

In einer weiteren vorteilhaften Ausgestaltung der Erfindung liegt der Ruß als stationäre Phase vor, über die die Öl-in-Wasser-Emulsion geleitet wird.

Diese Maßnahme hat den Vorteil, daß im Durchlaufbetrieb gearbeitet werden kann, d.h., daß die Öl-in-Wasser-Emulsion beim Durchleiten durch die stationäre Phase gereinigt wird.

In einer weiteren vorteilhaften Ausgestaltung der Erfindung wird Ruß in pulveriger oder geperlter (pelletisierter) Form eingesetzt.

Diese Maßnahmen haben den Vorteil, daß für den jeweiligen Anwendungsbereich einfach handhabbare Erscheinungsformen des Ruß vorhanden sind. Soll der Ruß in eine Ölemulsion eingerührt und mit dieser intensiv durchmischt werden, so ist es vorteilhaft, den Ruß in pulveriger Form einzusetzen. Soll der Ruß als stationäre Phase vorliegen, so kann er in handelsüblicher geperlter (pelletisierter) Form vorgelegt werden. Es ist auch möglich den Ruß in pastöser Form, d.h. mit einer Flüssigkeit benetzt oder angeteigt einzusetzen.

Es versteht sich, daß die vorstehend genannten und die nachstehend noch zu erläuternden Merkmale nicht nur in der jeweils angegebenen Kombination, sondern auch in anderen Kombinationen nd in Alleinstellung einsetzbar sind, ohne den Rahmen der vorliegenden Erfindung zu verlassen.

Die Erfindung wird nachfolgend anhand einiger ausgewählter Ausführungsbeispiele näher beschrieben und erläutert.

Beispiel 1

Ein ölhaltiges Wasser in Form eines Kompressorenkondensates mit einem pH 5 bis 6 weist einen Mineralölgehalt nach DIN 38 409-H18 von 550 mg/l auf.

100 ml des milchig trüben Kondensats werden bei Raumtemperatur (17 - 19°C) in einen mit einem Magnetrührer versehenen Becherglas gegeben und mit ca. 600 Upm gerührt. In das Becherglas werden 2 g Ruß (ein oxidierter Gasruß der Firma Degussa unter der Bezeichnung FW 200) eingetragen und für 15 Minuten dispergiert. Nach Absetzen (etwa 15 Minuten) wird die zwischenzeitlich klare Lösung, auf deren Boden sich schwarze Flocken abgesetzt haben, über einen Schwarzbandfilter abfiltriert. Der pH der Lösung beträgt ca. 3,5. Das klare, geruchlose Filtrat weist einen Restölgehalt von 2,4 mg/l auf.

### Beispiel 2

Dasselbe Kompressorenkondensat, wie in Beispiel 1, wird unter ansonst gleichen Bedingungen durch Zugabe von 50 mg Schwefelsäure auf etwa pH 2,5 angesäuert. Zu dieser Mischung werden lediglich 0,5 g Ruß FW 200 zugegeben.

Das abgetrennte klare Filtrat weist einen Restölgehalt von 1,3 mg/l auf.

Die Verbesserung des Restölwertes, trotz Verwendung von lediglich 1/4 der Rußmenge, beruht auf der Erniedrigung des pH-Wertes, wodurch dieser Gasruß eine höhere Aktivität entwickelt.

### Beispiel 3

Ein Kompressorenkondensat der Zusammensetzung, wie in Beispiel 1 beschrieben, wird unter Zugabe von 50 mg festem Kalkhydrat auf einen pH-Wert von 6,1 gebracht und anschließend 0,5 g Ruß FW 200 zugegeben. Nach Durchführen der in Beispiel 1 beschriebenen Verfahrensweisen wird ein klares, geruchloses Filtrat erhalten, das einen Restölwert von 4,9 mg/l aufweist.

### Beispiel 4

Das unter Beispiel 3 durchgeführte Verfahren wird unter an sich gleichen Bedingungen durchgeführt, wobei lediglich der pH-Wert durch Zugabe von 0,3 g festem Kalkhydrat auf über pH 10 eingestellt wurde.

Das erhaltene, klare, geruchlose Filtrat weist einen Restölgehalt von 6,0 mg/l auf.

Aus den Beispielen 1 bis 4 ist zu entnehmen, daß über einen breiten pH-Bereich mit einer Rußsorte ölhaltige Wässer aufgearbeitet werden können, wobei Restölwerte im Bereich zwischen 6 und 1,5 mg/l erhalten werden, die weit unter den gesetzlich geforderten Mindestwerten von 10 mg/l liegen.

### Beispiel 5

Zum Vergleich der Wirksamkeit gegenüber Aktivkohle, wird ein Kompressorenkondensat der Zusammensetzung, wie in Beispiel 1 beschrieben, mit 0,5 g Aktivkohle (der Firma Merck, Artikel Nr. 2183) unter den in Beispiel 1 beschriebenen Bedingungen zugegeben. Das erhaltene Filtrat ist trübe, riecht ölig und weist einen Restölgehalt von 16,2 mg/l auf.

Daraus ist eindeutig zu entnehmen, daß Ruß Aktivkohle weit überlegen ist, selbst im Bereich der nur geringfügig ölbelasteten Wässer, dem aus dem Stand der Technik bekannten Anwendungsgebiet von Aktivkohle als Adsorptionsmittel zur Aufarbeitung von ölhaltigen Wässern.

### Beispiel 6

Anhand dieses Beispieles wird die aus Beispiel 5 bereits zu erkennende, bessere Aufnahmekapazität von Ruß näher dargelegt. 100 ml eines Kompressorenkondensats mit einem pH von 5 bis 6, das nach DIN 38 409 H18 einen Mineralölgehalt von 550 mg/l aufweist, wird, wie in Beispiel 1 beschrieben, in ein 100 ml Becherglas gegeben und intensiv gerührt. Der pH-Wert der Lösung wird mittels Zugabe von 50 mg $H_2SO_4$ auf pH 2,5 eingestellt. Zu der gerührten Emulsion werden 0,5 g Ruß (FW 200) zugegeben und die Dispersion, wie in Beispiel 1 beschrieben, 15 Minuten bei Raumtemperatur gerührt. Nach Abfiltrieren der abgesetzten Rußflocken, wird ein klares Filtrat mit 1,3 mg/l Restölwert erhalten. Der abgefilterte Rückstand wird erneut in ein Becherglas mit 100 ml Kompressorenkondensat mit einem Mineralölgehalt von 550 mg/l gegeben. Auch diese Lösung wird mit 50 mg Schwefelsäure auf pH 2,5 angesäuert. Dieses Verfahren wird noch drei weitere Male durchgeführt, d.h., die ursprünglich 0,5 g eingesetzten Ruß werden 5 mal hintereinander zur Aufarbeitung von 100 ml des 550 mg/l enthaltenden Kondensates verwendet. Das Filtrat des letzten Behandlungsschrittes, ist klar, geruchlos und weist einen Restölgehalt von 5,9 mg/l auf.

In den fünf Behandlungsschritten wurden somit 500 ml des Kondensates mit einem Ölgehalt von 550 mg/l mit einer einzigen 0,5 g Rußportion aufgearbeitet, so daß zumindest 250 mg Öl durch 500 mg Ruß (0,5 g) aufgenommen wurden. D.h., der Ruß im letzten Arbeitsschritt hatte bereits 50 % seines Ursprungsgewichtes an Öl aufgenommen, erreichte jedoch weiterhin hervorragende Arbeitsergebnisse.

Wird der zuvor beschriebene Versuch mit 0,5 g Aktivkohle (der Firma Merck) ebenfalls unter Ansäuerung mit Schwefelsäure durchgeführt, so wird bereits nach einem Arbeitsdurchgang lediglich ein Restölgehalt von 5,1 mg/l erhalten, ein Wert der vergleichbar dem Wert des Rußes ist, den dieser nach 5facher Verwendung aufweist.

Wird die zuvor erwähnte Aktivkohle, die bereits in einem Arbeitsdurchgang eingesetzt wurde, in einem erneuten Ansatz eingesetzt, so ist das resultierende Filtrat trüb und die Aktivkohle mit einem ölig schmierigen Überzug versehen. Das Filtrat weist einen Restölgehalt von 84,0 mg/l auf. Daraus ist in eindrucksvoller Weise die erhöhte Aufnahmekapazität von Ruß zu erkennen.

Beispiel 7

Ein Kompressorenkondensat, das nach DIN 38 409-H18 einen Mineralölgehalt von 280 mg/l aufweist, wird bei einem pH von 2,5 entsprechend den unter Beispiel 1 beschriebenen Bedingungen mit 1 g eines Acetylenrußes mit der Bezeichnung "Acetogen-Ruß UV" der Firma Hoechst behandelt.

Die abfiltrierten Rußflocken werden, wie unter Beispiel 6 beschrieben, achtmal hintereinander eingesetzt, um jeweils 100 ml Portionen des Kondensates zu entsorgen. Der Restölgehalt des klaren Filtrates beträgt 0,46 mg/l.

Unter gleichen Bedingungen wurden 0,5 g eines Gasrußes mit der Bezeichnung FW 18 der Firma Degussa sechsmal hintereinander eingesetzt, das resultierende Filtrat weist einen Restölgehalt von 0,44 mg/l auf.

Daraus ist zu entnehmen, daß Ruße verschiedener Herstellungsart und -weisen im erfindungsgemäßen Verfahren eingesetzt Werden können.

Beispiel 8

Ein Kompressorenkondensat mit einem Mineralölgehalt nach DIN 38 409-H18 von 280 mg/l wird unter Zugabe von Schwefelsäure auf einen pH von etwa 2 bis 2,5 gebracht. Zu 100 ml dieses Kondensates, das, wie unter Beispiel 1 beschrieben, in einem Becherglas mittels eines Magnetrührers gerührt wird, werden jeweils 1 g folgender Ruße zugegeben:

    a) ein oxidierter Gasruß der Firma Degussa (Typ FW 200)

    b) ein Gasruß der Firma Degussa (Typ FW 1)

    c) ein Gasruß der Firma Degussa (Typ FW 18)

    d) ein Furnaceruß der Firma Degussa (Typ Printex L6)

    e) ein Muraruß der Firma Murachemie (Typ Mura 80/LK)

    f) ein Acetylenruß der Firma Hoechst (Typ Acetogenruß UV)

Bei allen Rußsorten wurde ein klares, geruchloses Filtrat erhalten, deren Restölwerte im Bereich zwischen etwa 0,5 und 2,5 mg/l liegen.

Auch hier ist eindeutig zu entnehmen, daß Ruße jedweder Herstellungsart im erfindungsgemäßen Verfahren eingesetzt werden können.

Beispiel 9

Eine Schmiermittelemulsion aus der metallverarbeitenden Industrie, mit einem pH von 8 bis 9, die mit Emulgatoren versehen ist, weist einen Mineralölgehalt nach DIN 38 409-H18 von 2160 mg/l auf.

100 ml dieser Emulsion werden entsprechend, wie in Zusammenhang mit Beispiel 1 beschrieben, in einem Becherglas intensiv gerührt. Die Lösung wird durch Zugabe von Schwefelsäure auf einen pH von 2,5 gebracht. Einem Ansatz werden 2,5 g eines Gasrußes der Firma Degussa mit der Bezeichnung FW 1 zugegeben und nach der Behandlung, wie unter Beispiel 1 beschrieben, die abgesetzten Rußflocken abfiltriert. Das Filtrat ist klar und weist einen Restölgehalt von 6,7 mg/l auf.

In einem weiteren Ansatz werden 2,5 g Aktivkohle (der Firma Merck) zugegeben und, wie zuvor beschrieben, behandelt.

Das resultierende Filtrat ist trüb, weist eine ölige Oberfläche auf und die Aktivkohlepartikel sind mit einem öligen, schmierigen Überzug versehen. Der Restölgehalt liegt weit über 100 mg/l.

Dieser Versuch zeigt eindeutig die Einsatzmöglichkeit von Rußen auch bei hochkonzentrierten, ölhaltigen Wässern, wobei bei diesen Konzentrationen Aktivkohle, wie eingangs erwähnt, nicht mehr einsetzbar ist.

Beispiel 10

Es wird eine Ölemulsion aus 100 ml Wasser, 50 mg Spülmittel, beispielsweise Pril, und 1 g Heizöl EL hergestellt. Das resultierende, ölhaltige Wasser weist somit eine Konzentration von 10 000 mg/l Mineralöl auf.

Zu dieser Emulsion wird 1 g eines Gasrußes der Firma Degussa (Typ FW 1) zugegeben und, wie unter Beispiel 1 beschrieben, weiterverfahren.

Das resultierende, klare, geruchlose Filtrat weist einen Restölgehalt von 0,7 mg/l auf.

Eine Emulsion gleicher Konzentration unter Verwendung eines Motorenöles 10 W 40 oder von n-Nonan führte zu vergleichbaren Ergebnissen.

Konzentrationen bis zu 25 000 mg/l konnten mit derselben Menge an Ruß (1 g) zu vergleichbaren Werten entölt werden. Daraus ist zu entnehmen, daß die Aufnahmekapazität eines Rußes bis zum 2,5-fachen seines Eigengewichts betragen kann, d.h. 1 g Ruß kann bis zu 2,5 g Kohlenwasserstoff aufnehmen.

Es können also extrem belastete Abwässer, wie beispielsweise bei Ölunfällen, einfach und wirksam mit geringer Einsatzmenge beseitigt werden.

## Beispiel 11

1 l Wasser, das mit 400 mg Toluol vermischt ist (Toluolgehalt der klaren wässrigen Phase 37 mg/l), eine Mischung, die zwei Phasen bildet, wird mit 4 g n- Dekan vermischt. Zu 250 ml dieser Mischung werden 50 mg Spülmittel als Emulgatorzusatz hinzugefügt. Die resultierende, stark durchgerührte Emulsion, wird mit 2 g eines Gasrußes der Bezeichnung FW 18 versehen. Nach einer Reaktionsrührzeit von 15 Minuten und einer Absetzzeit von etwa 15 Minuten, wird ein klares, geruchloses Filtrat erhalten, das einen Restölgehalt von 1,2 mg/l Toluol und 0,05 mg/l n-Dekan aufweist. Die Analysenwerte wurden nach GC/FID ermittelt.

Toluol, das eine relativ hohe Löslichkeit in Wasser besitzt, wurde somit durch Extrahieren mit n-Dekan in die Dekanphase und anschließend die Mischung in eine Emulsion übergeführt.

Durch diese Verfahrensweise ist es möglich, auch ölhaltige Wässer, in denen hohe Anteile gelöst sind, nach dem erfindungsgemäßen Verfahren aufzuarbeiten. Dabei können ölhaltige Schlämme mit emulgatorhaltigem Wasser extrahiert werden, die erhaltene Öl-in-Wasser-Emulsion von den Feststoffen abgetrennt und anschließend mit Ruß behandelt werden. Das resultierende Filtrat der Rußbehandlung kann dann erneut zu Extraktion von ölhaltigen Schlämmen verwendet werden.

## Beispiel 12

Es werden 300 ml eines industriellen Abwassers aus Wasser, Per (Perchlorethylen, 13 mg/l) und Toluol (0,31 mg/l) mit 80 mg eines Spülmittels (z.B. Pril) als Emulgator und 1 g n-Dekan 5 Minuten gerührt und nach Ansäuren mit 50 mg H₂SO₄ konz anschließend mit 2 g eines Gasrußes mit der Bezeichnung FW 18 für 15 Minuten gerührt. Per wird in Reinigungen verwendet und fällt in Ablaugen von Industriereinigungsunternehmen an.

Das klare, geruchlose Filtrat, nach Abtrennen des Rußes, weist einen Restölgehalt von 0,48 mg/l auf (Per 0,25 mg/l, Toluol 0,1 mg/l, n-Dekan 0,13 mg/l). Die Analysenwerte wurden nach GC/FID ermittelt.

Auch hieraus ist zu entnehmen, daß ölhaltige Wässer, die zum Teil echte Lösungen des betreffenden Öles enthalten, durch ein vorgeschaltetes Extraktionsverfahren unter Bildung einer Emulsion aufgearbeitet werden können.

## Beispiel 13

Eine Glassäule mit einem Innendurchmesser von 15 mm und einer Länge über alles von 390 mm, welche am unteren Ende mit einer eingeschmolzenen Glasfritte und einem Glaskücken versehen ist, wird mit 30 ml angesäuerten SBW-Kondensat (Mineralölgehait 280 mg/l (pH 3 bis 4)) gefüllt. Hier hinein gibt man 7 g pelettiesierten Gasruß FW 18, um eine luftfreie Packung zu erreichen.

Man läßt das gereinigte Kondensat mit einer Laufgeschwindigkeit von 0,1 bis 1,0 ml pro Minute austreten.

Die ersten 10 bis 15 ml sind noch trüb und werden auf den Kopf der Säule wieder aufgegeben. Danach tropft eine blanke, wasserklare und geruchlose Filtratphase ab.

Die Flüssigkeitssäule über der Rußsäule beträgt ca. 250 mm. Diese wird durch kontinuierliche Zugabe der zu reinigenden Flüssigkeit konstant gehalten.

Es wurden nacheinander folgende Fraktion am Auslauf der Säule entnommen und untersucht:

1. Fraktion 80 ml Filtrat, blank Restölgehalt kleiner 0,5 mg/l

2. Fraktion 60 ml Filtrat, blank Restölgehalt kleiner 0,5 mg/l

3. Fraktion 60 ml Filtrat, blank Restölgehalt kleiner 0,5 mg/l

4. Fraktion 80 ml Filtrat, blank Restölgehalt kleiner 0,5 mg/l

## Ansprüche

1. Verfahren zum Aufarbeiten von ölhaltigen Wässern, bei dem eine Öl-in-Wasser-Emulsion mit einem festen Adsorptionsmittel in Berührung gebracht wird, wobei das Adsorptionsmittel das Öl aus dem Wasser entnimmt, und bei dem anschließend das ölfreie Wasser vom Adsorptionsmittel abgetrennt wird, dadurch gekennzeichnet,·daß das Adsorptionsmittel Ruß ist.

2. Verfahren nach Anspruch 1, dadurch gekennzeichnet, daß die Öl-in-Wasser-Emulsion intensiv mit dem Ruß dispergiert wird.

3. Verfahren nach Anspruch 2, dadurch gekennzeichnet, daß das Dispergieren durch intensives Rühren durchgeführt wird.

4. Verfahren nach Anspruch 2 oder 3, dadurch gekennzeichnet, daß die Dispersion vor Abtrennen des ölfreien Wassers vom das Öl enthaltenden Ruß stehen gelassen wird.

5. Verfahren nach einem der Ansprüche 1 bis 4, dadurch gekennzeichnet, daß es bei Raumtemperatur durchgeführt wird.

6. Verfahren nach einem der Ansprüche 1 bis 5, dadurch gekennzeichnet, daß eine solche Menge an Ruß zugegeben wird, die dem Mehrfachen der Menge entspricht, die zumindest notwendig ist, um aus einer Öl-in-Wasser-Emulsion das Öl zu adsorbieren.

7. Verfahren nach Anspruch 6, dadurch gekennzeichnet, daß die abgetrennte, bereits ölhaltige Rußphase so oft erneut mit einem ölhaltigen Wasser in Berührung gebracht wird, bis die Aufnahmekapazität der Rußphase nahezu erschöpft ist.

8. Verfahren nach einem der Ansprüche 1 bis 7, dadurch gekennzeichnet, daß zusätzlich zum Ruß ein Flockungshilfsmittel zugegeben wird.

9. Verfahren nach einem der Ansprüche 1 bis 8, dadurch gekennzeichnet, daß zur Aufbereitung von sauren Öl-in-Wasser-Emulsionen alkalische Ruße, zur Aufbereitung von alkalischen Öl-in-Wasser-Emulsionen saure Ruße, und das zur Aufbereitung neutraler Öl-in-Wasser-Emulsionen neutrale Ruße verwendet werden.

10. Verfahren nach einem der Ansprüche 1 bis 9, wobei das Öl eine bestimmte Löslichkeit im Wasser besitzt oder unbegrenzt mit Wasser mischbar ist, dadurch gekennzeichnet, daß zunächst dem ölhaltigen Wasser eine in Wasser unlösliche flüssige Substanz zugegeben wird, in der das Öl eine bessere Löslichkeit als im Wasser aufweist, so daß das in Wasser gelöste Öl in die flüssige Substanz übergeführt wird, daß die nichtwässrige Phase aus Öl und flüssiger Substanz mit dem verbleibenden Wasser in eine Emulsion übergeführt wird, und daß dann diese Emulsion mit dem Ruß in Berührung gebracht wird.

11. Verfahren nach Anspruch 1 oder 10, dadurch gekennzeichnet, daß der Ruß als stationäre Phase vorliegt, über die die Öl-in-Wasser-Emulsion geleitet wird.

12. Verfahren nach einem der Ansprüche 1 bis 10, dadurch gekennzeichnet, daß der Ruß in pulveriger Form eingesetzt wird.

13. Verfahren nach Anspruch 11, dadurch gekennzeichnet, daß der Ruß in geperlter (pelletisierter) Form eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 252 777 (FRIED. KRUPP GmbH) * Seite 1, letzter Absatz - Seite 2, Absatz 1; Seite 3, Absatz 3 - Seite 4, Absatz 1; Ansprüche 1,4,9,12 * | 1-5,7 | B 01 D 17/022 |
| Y | | 8,11 | |
| A | | 6,12,13 | |
| | --- | | |
| X | NL-A- 299 200 (UNION RHEINISCHE BRAUNKOHLEN KRAFTSTOFF A.G.) * Seite 1, Zeilen 1-9; Seite 2, Zeilen 12-19,28-33; Ansprüche 1,2 * | 1,4 | |
| A | | 2,12,13 | |
| | --- | | |
| Y | DE-A-2 856 248 (ANLAGEN- UND FILTERBAU GmbH) * Seite 6, Zeilen 11-21; Ansprüche 1,4,7 * | 8,11 | |
| | --- | | |
| A | DE-C- 112 512 (J. SCHWAGER) * Komplettes Dokument * | 1-3,5, 12 | |
| | --- | | |
| A | WO-A-8 802 655 (BERGWERKSVERBAND GmbH) * Zusammenfassung; Seite 7; Ansprüche 1,2,6 * | 1-3 | |
| | ----- | | |

**RECHERCHIERTE SACHGEBIETE (Int. Cl.5)**

B 01 D
B 01 J
C 10 M

Der vorliegende Recherchenbericht wurde für alle Patentansprüche erstellt

| Recherchenort | Abschlußdatum der Recherche | Prüfer |
|---|---|---|
| DEN HAAG | 14-02-1990 | MARZENKE J. |